(19) **Europäisches Patentamt European Patent Office Office européen des brevets**

(11) **EP 2 028 640 B1**

(12) **EUROPEAN PATENT SPECIFICATION**

(45) Date of publication and mention
of the grant of the patent:
**24.04.2013 Bulletin 2013/17**

(51) Int Cl.:
*G09G 3/34* (2006.01)     *G09G 3/36* (2006.01)

(21) Application number: **08160797.0**

(22) Date of filing: **21.07.2008**

(54) **Auto adjusting backlight and pixel brightness on display panels**

Sich automatisch einstellende Hintergrundbeleuchtung und Pixelhelligkeit auf Anzeigetafeln

Rétroéclairage et luminosité de pixels auto-réglables sur des panneaux d'affichage

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **17.08.2007 TR 200705747**

(43) Date of publication of application:
**25.02.2009 Bulletin 2009/09**

(73) Proprietor: **Vestel Elektronik Sanayi ve Ticaret A.S.**
**45030 Manisa (TR)**

(72) Inventors:
• **Aytac, Cihat**
 **45030 Manisa (TR)**
• **Gurbuz, Ebru**
 **45030 Manisa (TR)**
• **Boran, Baris**
 **45030 Manisa (TR)**

• **Sever, Enis**
 **45030 Manisa (TR)**

(74) Representative: **Cayli, Hülya**
 **Paragon Consultancy Incorporated**
 **Koza Sokak No: 63/2**
 **GOP 06540 Ankara (TR)**

(56) References cited:
 **EP-A- 1 335 430       EP-A- 1 672 706**
 **US-A- 5 831 693       US-A1- 2005 184 952**
 **US-A1- 2006 273 999    US-A1- 2007 035 707**
 **US-A1- 2007 115 228    US-A1- 2007 152 952**
 **US-A1- 2007 188 425**

• **DATABASE WPI Week 200766, Derwent Publications Ltd., London, GB; AN 2007-707033 & US 2007 152952 A1 (LG DISPLAY CO LTD) 05 July 2007**

**Description**

**Technical Field**

The present invention relates to a display panel with sensors for adjusting brightness of the panel elements, and to methods for adjusting the brightness or color of the panel elements.

In particular, the present invention relates to a method for adjusting backlight and/or pixel brightness by comparing the backlight and ambient luminance values, which are determined by sensors placed on front and/or back of the elements of the pixels or sub-pixels of the display panel, for each pixel, and driving pixel or sub-pixel emitting devices by using that information to automatically adjust backlight and/or pixel brightness, which may improve backlight uniformity and reduce light effects on the display panel.

**Prior Art**

One of the main problems in display panels comprised of panel elements which are somehow illuminated, is to adjust the backlight to provide a dynamical brightness control to get the best performance from the display panel under all conditions. This adjustment consists of two main aspects which are;

- Establishing backlight/emitted light uniformity ("objective" brightness of the panel elements)
- Adjusting brightness for all ambient light conditions (perceived brightness of the panel's surface as seen by an observer, influenced by incident ambient light)

In one conventional method, backlight uniformity can only be achieved at the time the display panel is manufactured. In this method, one or more light sources (fluorescent lamps, white LEDs) are placed at predetermined places of the display panel and a diffuser is used to provide a certain degree of backlight uniformity. By this approach, it is intended to achieve the same luminance for every pixel (an image forming element, a.k.a. panel element) on the display. Although this method may provide backlight uniformity at some conditions, no individual pixel brightness control is possible.

In a conventionally known method, backlight uniformity for display panels that have light emitting devices for every pixel, like plasma displays, LED based displays or SED displays, can only be established in production of the display panel. This can solely be achieved by using equivalent light emitting devices on the display panel. In other words, it is assumed that having equivalent light emitting devices guarantees the backlight uniformity.

In practice, equivalent light emitting devices will not deliver adequate light for some operations. This is caused by the structure of these electronic devices. Although the production of these equivalent light sources is identical, the tolerances of the components used in those devices may change and this may cause deviations among these devices. In other words, it is not always possible to have the same brightness level for all equivalent light emitting devices.

The conventional method to establish some uniformity of the brightness comprises two steps. These are;

- Selecting equivalent light emitting devices by testing
- Using selected light emitting devices having identical/equivalent characteristics for a particular panel

Obviously, with this method, a brightness test and possibly calibration for every individual light emitting device is needed, which causes time and money to be lost in production.

In a known method, performing display panel brightness adjustment means controlling the brightness level of all light emitting devices together. This control can be both automatic and manual.

Conventionally, automatic brightness adjustment can be established by two methods. These methods differ from each other by how the luminance sensors are used, as follows.

One previous method is to use display panels which have luminance sensor outside the display panel which detect the ambient light level and adjust the backlight brightness by using this information. Most of the display panels that use this method have just one luminance sensor.

The other state of the art method is to use display panels which have luminance sensor on the display panel in order to detect the ambient light effect on the display and adjust the backlight brightness by using this information. luminance sensors may be placed on the sides of the display panel or some predetermined and few places on the surface of the display panel.

Manual adjustment means user control the brightness level of the backlight. That is a simple and common brightness adjustment that almost every display panel incorporates.

It is obvious that at least one luminance sensor for every pixel or panel element is needed to adjust brightness of every pixel/panel element individually.

Although touch-panels have the ability to detect ambient light effect for every pixel, they do not use that information in adjustment of the display brightness. Also, touch-panels do not need to measure the backlight for each pixel.

Display panel producers have to test every light emitting device that will be used in panel production in order to have brightness uniformity for the display panels that have light emitting devices for every pixel. This creates time and money loss. If the producers do not test the light emitting devices and do not use the substantially identical devices on the same panel, there will be loss in quality and reliability of the products.

Common backlight brightness adjustment systems do not have the ability to control a brightness level for every pixel on the display device. They can only perform a general brightness adjustment. That means that typical brightness adjustments are not capable of adjusting specific parts of the display individually. They do not have effective solution for dark and bright areas caused by reflections.

Related to the mentioned technical problems, EP 1 335 430 A1 patent document proposes to use luminance sensors in order to provide display homogeneity for a flat-panel display. Said invention comprises a set of luminance sensors formed within the panel and said sensors detect luminance of the neighboring pixels. Sensors and pixel photodiodes are connected through an addressable bus and a read out and feedback circuit adjusts pixel brightness in accordance with sensor outputs. The invention provides a successive approach to deal with inhomogeneities of a display panel. However, application of the invention may fail to compensate pixel differences since depending on the placement of sensors, the sensors may sense a combination of pixel brightness and ambient light. The occurrence of such sensing results in miscalibration of panel and a degraded image display.

Another patent document US 2007/0115228 A1 proposes a calibration method for a lighting panel. The method involves employment of a control unit and a color management unit, which inputs several sensor data including photo sensor data. The panel is calibrated in accordance with sensor readings. Although said invention seems to solve inhomogeneity problem, the patent document fails to define required amount of sensor sets and placement of sensors on the panel. Hence the invention does not guarantee an exact homogeneity on panel.

There is no way to recalibrate individual pixels, which have a brightness problem caused by their continued usage, in conventional brightness adjustment methods. That means that if there is a problem in brightness levels of some pixels on the display panel, there is no other way to resolve this problem than to repair the display panel.

## Brief Description of Invention

The invention is set fourth in independent claims 1, 16 and 24.

As explained above, there are several disadvantages of the display panels known in the state of the art, which are all caused by the fact that there is not enough and no sufficiently location/time resolved information available, of a present condition of panels, to achieve a homogenous perception of an image displayed by the panel, in those parts of the image intended to be displayed homogenously.

Therefore, the object of the present invention is to provide an approach with which an image can be displayed in a homogenous manner under all conditions of ambient light and/or display panel pixels.

This object is, in a first aspect of the invention, solved by a display panel comprising

- a plurality of panel elements arranged in a two dimensional array and being capable of emitting light;

- a first subset of pixel brightness sensors uniformly arranged in both dimensions of the panel at panel elements of the panel, for sensing brightness of the light emitted from the panel elements at which they are arranged;

- brightness determining means connected to the pixel brightness sensors for determining brightness differences of the panel elements at which the pixel brightness sensors are arranged; and

- compensation means for adjusting the brightness of panel elements of the display panel, based on the determined brightness differences, in order to compensate brightness inhomogeneities among the panel elements.

A pixel brightness sensor according to the invention is to be understood as any device which is capable of sensing light incident on its surface and generated/emitted from the panel element it is associated with. Brightness is to be understood as characterising the amount of light emitting from a panel element. The term panel element designates any entity within the display panel which is capable of controlling light emission of a particular area of the panel's surface.

A plurality of pixel brightness sensors means any plural number appropriate for achieving the object of the invention. E.g., the number of the pixel brightness sensors may amount to 10 % of the total number of panel elements, preferably 20 %, more preferably 50 %, and may reach 100 %, of the total number of panel elements, i.e. all panel elements are provided with sensors.

The condition of being uniformly arranged will lead to the sensors forming a grid which overlays the grid of panel elements. By this, it can best be assured that Uniformly does not necessarily mean that the distances between all sensors be equal, but that the sensors, in their entirety, cover the complete display panel area, so that the brightness may be determined for all areas of the panel display.

According to the invention, brightness differences between the sensors, and hence their associated panel elements, will be determined and be the basis for an adjustment step. It is to be understood that for this determination, also the intended brightness of a panel element, or an area of panel elements, must be considered, since an equal brightness only makes sense if the brightness was intended to be equal, between the areas concerned.

In a preferred embodiment of the invention, the compensation means is configured to adjust the brightness to become uniform throughout the entire display panel.

The inventive display panel is further be characterized by:

- a second subset of incident light sensors uniformly arranged in both dimensions of the panel at panel elements of the panel, for sensing luminance of ambient light incident on the panel elements at which they are arranged;

- luminance determining means connected to the incident light sensors for determining luminance differences of the ambient light at the panels elements at which the incident light sensors are arranged; and

- compensation means for adjusting the brightness of panel elements of the display panel, based on the determined luminance differences.

By using two different subsets of sensors, in combination designated as a "set of sensors", luminance of incident light on the surface etc. of a panel element can be measured at the same time as the inherent brightness of that panel element. This allows for a better fine tuning of the adjustment step (if combined into a single step, calculating the "correction factor" for the adjustment, based on both luminance and brightness) or steps.

The compensation means is configured for compensating differences in the luminance at different panel elements for the brightness to become uniform over the entire display panel.

Preferably, the sensors of both subsets of sensors are respectively arranged at identical panel elements, and form a set of sensor pairs. This allows for a space saving arrangement and shorter communication lines.

In a particular preferred embodiment of the invention, sensors are arranged at each panel element.

Advantageously, the sensors are arranged on a surface of the panel elements.

The incident light sensors are preferably arranged on a front surface of the panel elements facing an observer and/or being exposed to ambient light, and/or the pixel brightness sensors are arranged on a backside of the panel elements opposite to the front surface.

The pixel brightness sensor and the incident light sensor respectively may be located at each panel element are substantially congruently arranged on said panel element.

The panel elements are light emitting devices.

In this case, it is further preferred that the compensation means is configured for adjusting the power of the light emitting devices.

In a preferred embodiment of the invention, the brightness determining means comprises a plurality of brightness determining devices each connected with a group of adjacent sensors, for determining an average brightness of each said group of sensors, and the brightness determining means may be configured for determining brightness differences between these average brightness

Advantageously, the panel elements are sub pixels for displaying one basic colour of the colour set of a pixel of the display panel.

Preferably, the sensors are arranged on one of the sub pixels of each pixel of the display panel.

The panel elements may be connected with a controller for controlling the panel elements via connecting lines, and the sensors may be connected with the determining means and/or the compensation means via the same connecting lines, in order to reduce the number of lines required on the panel.

Preferably, each sensor comprises a charge storage device for storing the brightness or luminance information sensed by said sensor.

The panel elements preferably comprise colour filters for determining a colour of the light they emit, and in that the incident light sensors are arranged at a position behind the colour filters for sensing only incident light of the colour for which the filters are transmissive.

In a further aspect, the object of the invention is solved by a method for compensating inhomogeneities of the brightness of a display panel comprising a plurality of panel elements arranged in a two-dimensional array and being capable of emitting light, comprising the steps:

- sensing brightness of the light emitted from the panel elements by pixel brightness sensors of a first subset of sensors arranged at panel elements of the panel;

- determining brightness differences of the panel elements at which the pixel brightness sensors are arranged; and

- adjusting the brightness of panel elements of the display panel, based on the determined brightness differences, in order to compensate brightness inhomogeneities among the panel elements.

The inventive method comprises the further steps:

- sensing luminance of ambient light incident on the panel elements, by incident light sensors of a second subset arranged at panel elements of the panel;

- determining luminance differences of the ambient light at the panels elements at which the incident light sensors are arranged; and

- adjusting the brightness of panel elements of the display panel, based on the determined luminance differences, in order to compensate perceived brightness inhomogeneities of the display panel.

In a preferred embodiment of the invention, the sensors of both subsets of sensors are respectively arranged at identical panel elements, and both sensors of each panel elements at which said sensors are arranged, are used for determining brightness of the panel element and luminance of a light incident on the panel element.

The inventive method may also be characterized in that the sensing of the luminance of ambient light is performed within a time period, at which the panel element does not emit light.

In one embodiment of the invention, the adjustment of the brightness of panel elements is based on both the brightness differences and the luminance differences.

The panel elements are light emitting devices and the inhomogeneities of the brightness and/or of the perceived brightness are compensated by adjusting the power of the light emitting devices.

Preferably, an average brightness is determined for a group of adjacent sensors and brightness differences are determined between these average brightnesses.

The panel elements are, in a particular aspect of the invention, sub pixels for displaying one basic colour, respectively, of the colour set of a pixel in the display panel, arranged in pixels in which every sub pixel emits a different basic colour, and the method comprises the further step:

- adjusting the brightness of each sub pixel in a pixel in order to compensate for a specific determined colour of the ambient light incident on said pixel.

Advantageously, each panel element is connected with a controller for controlling the panel element via at least one connecting line and that in the sensing step, a sensor arranged at the panel element is read out using the connecting line, to which the sensor is also connected.

Advantageously, the sensor is read out via the connecting line in a time period in which the panel element, which is connected with the same connecting line, is not controlled.

The term "controlled" here is intended to mean a state in which electrical signals are applied to the connecting lines, in order to activate, deactivate or modulate the panel element.

In yet a further aspect of the invention, the object is also solved by a method for compensating inhomogeneities of the perceived brightness of a display panel comprising a plurality of panel elements arranged in a two-dimensional array and being capable of emitting light, which inventive method comprises the steps:

- sensing luminance of ambient light incident on the panel elements, by incident light sensors of a second subset arranged at panel elements of the panel;

- determining luminance differences of the ambient light at the panels elements at which the incident light sensors are arranged; and

- adjusting the brightness of panel elements of the display panel, based on the determined luminance differences.

In this aspect, the panel elements are preferably light emitting devices and the inhomogeneities of the perceived brightness are compensated by adjusting the power of the light emitting devices.

Preferably, an average brightness is determined for a group of adjacent sensors and brightness differences are determined between these average brightnesses.

In a further embodiment, this inventive method is characterized **in that** the panel elements are sub pixels for displaying one basic colour, respectively, of the colour set of a pixel on the display panel, arranged in pixels in which every sub pixel emits a different basic colour, and it comprises the step:

- adjusting the brightness of each sub pixel in a pixel in order to compensate for a specific determined colour of the ambient light incident on said pixel.

Advantageously, each panel element is connected with a controller for controlling the panel element via at least one connecting line, and in the sensing step, a sensor arranged at the panel element is read out using the connecting line, to which the sensor is also connected.

The sensor may particularly be read out via the connecting line in a time period in which the panel element, which is connected with the same connecting line, is not controlled.

In still another aspect of the invention, the object of the invention is solved by a method for compensating colour differences on a display panel comprising a two dimensional array of panel elements, wherein the panel elements are sub pixels for displaying one basic colour of the colour set of a pixel of the display panel, arranged in pixels in which every sub pixel emits a different basic colour, and the method comprises the steps:

- sensing, for each sub pixel of a pixel, a brightness of the light of the basic colour emitted from the sub pixel by pixel brightness sensors of a first subset of sensors arranged at each sub pixel of pixels;

- determining brightness differences of the sub pixels at which the pixel brightness sensors are arranged; and

- adjusting the brightness of each sub pixel in a pixel in order to compensate for a specific determined colour of the said pixel, based on the brightness differences determined for the sub pixels of the pixel.

Further, this method is characterized in that inhomogeneities of the perceived colour of said pixels are compensated, and that it comprises the steps:

- sensing luminance of ambient light incident on the sub pixels, by incident light sensors of a second subset arranged at sub pixels of pixels, wherein each sensor senses substantially light having a colour corresponding to the colour of the light emitted by the sub pixel at which the sensor is arranged;

- determining luminance differences of the ambient light at the sub pixels of each pixel at which the incident light sensors are arranged,

- determining a colour of the ambient light incident on each pixel, based on the determined luminance differences; and

- adjusting the brightness of the sub pixels of each pixel in order to compensate for a specific determined colour of the ambient light incident on said pixel.

The light incident on the sensors is preferably filtered by the same or a substantially identical filter as used for filtering the light of the sub pixels at which the sensors are respectively arranged.

The sensors of both subsets of sensors may also be respectively arranged at the sub pixels of identical pixels and that both sensors of each sub pixel at which said sensors are arranged are used for determining brightness of the sub pixels and colour of a light incident on the pixels.

The sub pixels are light emitting devices and the inhomogeneities of the brightness and/or of the colour are compensated by adjusting the power of the light emitting devices.

In a further preferred embodiment, each sub pixel is connected with a controller for controlling the sub pixel via at least one connecting line, and that in the sensing step, a sensor arranged at the sub pixel is read out using the connecting line, to which the sensor is also connected.

Advantageously, the sensor is read out via the connecting line in a time period in which the sub pixel, which is connected with the same connecting line, is not controlled.

## The Objective of **Invention**

The objective of the present invention is to provide a dynamical brightness control and to prevent the backlight brightness inhomogeneities on display panels comprised of panel elements which are somehow illuminated.

**Brief Disclosure of Drawings**

Fig. 1     shows a highly schematic embodiment of the general layout of a panel display according to the invention;

Fig. 2     shows the arrangement of sensors on a display panel according to a first embodiment of the invention;

Fig. 3     shows an alternative arrangement of the sensors on a display panel according to another embodiment of the invention, in which both brightness and luminance sensors are arranged in TFT elements;

Fig. 4     shows yet another arrangement according to a further embodiment of the invention, in which sensors are placed at every TFT cell of a display panel;

Fig. 5A    shows the basic principle of sensor arrangements according to one embodiment of the invention;

Fig. 5B    shows in three-dimensional depiction a possible arrangement of the sensors on a TFT cell;

Fig. 6     shows a possible sensor arrangement for the sub-pixels of different colours on TFT panel;

Fig. 7     shows in plane view the placement of the sensors on a TFT panel according to one specific embodiment of the invention;

Fig. 8     shows, in three-dimensional view, a possible arrangement of brightness and luminance sensors on both sides of a TFT panel plane, overlapping the TFT;

Fig. 9     depicts a layout of a section of a display panel including two sensors per pixel element which are connected by two extra wirings;

Fig. 10    shows a further layout of a TFT panel section according to another embodiment of the invention, in which the two sensors are connected in series with one extra wiring for each column;

Fig. 11    depicts yet another possible layout of a section of a display panel, in which the parallelly connected sensors use the same connection lines as the TFTs;

Fig. 12    is a further embodiment of the present invention, showing a section of a display panel in which the sensors have additional enable inputs;

Fig. 13    is a time diagram of emitting time and measurements done by the sensors;

Fig. 14    is a time diagram showing the usage of the connecting line of TFT for cases, in which the connecting line is shared with the sensors;

Fig. 15    is a flow diagram of a preferred embodiment of the inventive method, showing detailed procedure steps.

Fig. 16    shows the generally known layout of TFT elements of a display panel;

Some of the parts in said figures are individually enumerated as following:

Display panel (1)
Panel elements (2)
Sub-pixels (2a), (2b), (2c)
TFT (3)
Connection element (3a)
Transparent electrode (4)
TFT row connecting lines (5)
Connection line (5a), (18a), (18b)
Sensor connecting line (5b), (5c), (6b), (6c), (15a), (16a)

Gate connecting line (5A)
TFT column connecting lines (6)
Source connecting line (6a)
Cross-over patch (7)
Pixel brightness sensor (8)
Respective sensors for sub-pixels (8a), (8b), (8c)
Incident light sensor (9)
Backlight (10), (28)
Luminance sensor connecting line (15)
Pixel brightness sensor line (16)
Combined sensor connecting line (17)
Single combined sensor connecting line (17a)
Ground column connecting line (18)
Capacitance (19)
Enable column line (20)
Enable connecting lines (20a, 20b)
Brightness determining means (25)
Compensation means (26)
Luminance determining means (27)
Control bus (29)

## Detailed Description of Invention

The main problem for adjusting backlight brightness and improving backlight uniformity is the differences on light emitting devices even if the light emitting devices are equivalent. The differences on equivalent light emitting devices can be caused by the tolerances of the components used in production or design of the display panel. In both conditions it is not possible to maintain 100% backlight uniformity. A display panel that is capable of detecting luminance of environmental light source and brightness (of a backlight or the pixel itself, if self-illuminating) for every pixel / sub-pixel on it can solve this problem.

Thus, the invention provides a display panel comprising

-    a plurality of panel elements arranged in a two dimensional array and being capable of emitting light;

-    a first subset of pixel brightness sensors uniformly arranged in both dimensions of the panel at panel elements of the panel, for sensing brightness of the light emitted from the panel elements at which they are arranged;

-    brightness determining means connected to the pixel brightness sensors for determining brightness differences of the panel elements at which the pixel brightness sensors are arranged; and

-    compensation means for adjusting the brightness of panel elements of the display panel, based on the determined brightness differences, in order to compensate brightness inhomogeneities among the panel elements.

The invention also provides a method for compensating inhomogeneities of the brightness of a display panel comprising a plurality of panel elements arranged in a two-dimensional array and being capable of emitting light, comprising the steps:

-    sensing brightness of the light emitted from the panel elements by pixel brightness sensors of a first subset of sensors arranged at panel elements of the panel;

-    determining brightness differences of the panel elements at which the pixel brightness sensors are arranged; and

-    adjusting the brightness of panel elements of the display panel, based on the determined brightness differences, in order to compensate brightness inhomogeneities among the panel elements.

The pixel display device according to a preferred embodiment of the invention has at least one luminance sensor placed at or in every panel element (pixel / sub-pixel) of the display device.

If two sensors are placed at a panel element, preferably one of these sensors measures the brightness of the backlight or a self lighting panel element while the other one measures the luminance effect caused by environmental light sources on the display panel.

Sensors placed e.g. on the back of the TFT parts of the pixels/sub-pixels are used to improve the backlight uniformity. The luminance level for each pixel / sub-pixel is determined and can be stored. This luminance information is used in feedback for the luminance level of the panel element. By this inventive method, the brightness level of all pixels is equalized or in another way adjusted, as deems appropriate to the skilled person.

Environmental light sources may have different effects on each pixel. Some pixels may be dark and some pixels may be bright because of environmental light sources. A self-driven pixel display device is a solution to have a better view on the display. Sensors placed in front of the TFT parts of the pixels / sub-pixels are used to reduce the effects of environmental light sources on the display panel. The environmental luminance level for each pixel / sub-pixel is determined and stored. This luminance information is used in feedback for calculating new pixel picture values for pixels / sub-pixels.

The inventive method is also applicable for adjusting for only backlight or environmental light effects. That means; at least one luminance sensor for each pixel / sub-pixel measures luminance level of backlight or environmental light source effect on display panel and pixel / sub-pixel adjustment is established by using this luminance data.

Luminance sensors can be placed on TFT parts in each pixel in TFT display panels. By this method there will be no additional light loss caused by the area of the sensor.

Preferably, every pixel / sub-pixel is connected to a luminance control circuit. That circuit is responsible for driving the light emitting device and TFT parts of the pixels upon the stored luminance information. That means every pixel is driven upon the luminance values of itself.

By this method, 100% brightness uniformity for all display panels is provided. Also, the dynamical structure of the method provides the improved brightness uniformity under all environmental conditions.

The invention will now be described with regard to the drawings in which various embodiments thereof are shown and explained.

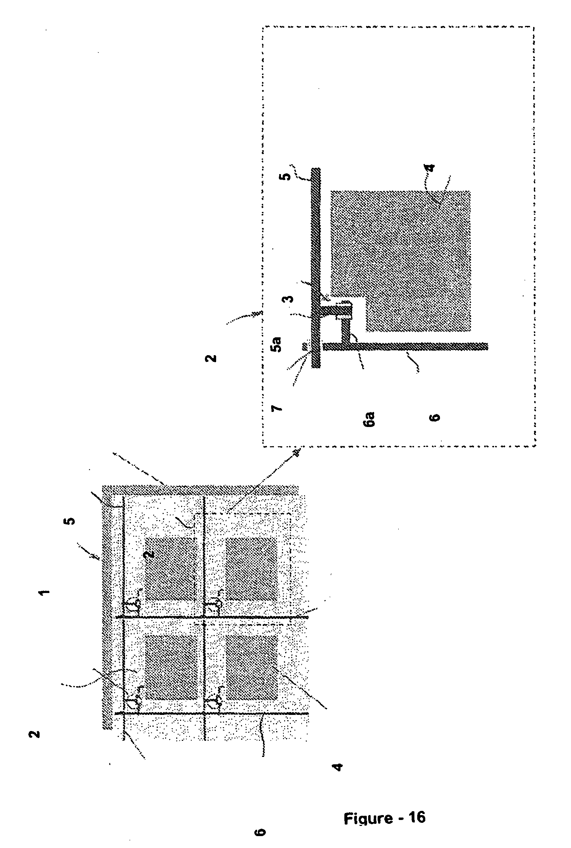

Fig. 16 shows a section of the prior art TFT display panel (1) in which a number of cells or pixels (2) are equidistantly arranged. These cells consist of a TFT (3) which is connected to a transparent electrode, acting as a drain to the TFT. Via connecting lines (5a) (gate) and (6a) (source) the TFT is connected with row connecting lines (5) and column connecting lines (6) which are arranged orthogonally and in a number equivalent to the number of rows and columns of pixels for the display, respectively, in parallel. The intersections of row lines (6) and column lines (6) are electrically insulated with cross-over patches (7).

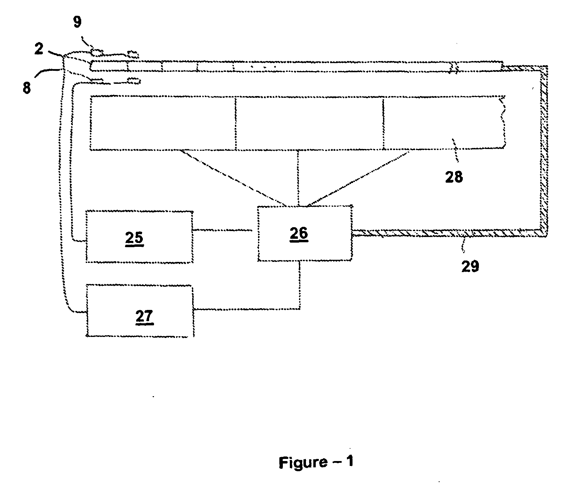

It is to be understood that the TFT display layout shown in Fig. 1 is to be taken only exemplarily, as other layouts may be possible, and the application is likewise applicable to other kinds of display panels, like plasma panels etc.

Fig. 1 is a schematic layout for a display panel of a comparative example of the invention, using a backlight LCD display as an example. A LCD array of panel elements (2) is on each side thereof provided with pixel brightness sensors (8), and incident light sensors (9), respectively (only two of each are depicted) uniformly arranged in both dimensions of the panel at the panel elements (2) of the panel, and are for sensing brightness of the light emitted from the panel elements (2), and luminance of ambient light incident on the panel elements, respectively, at which they are arranged.

Brightness determining means (25) are connected to the pixel brightness sensors (8) receive input from the sensors (8) and determine brightness differences of the panel elements (2) at which the pixel brightness sensors (8) are arranged.

Compensation means (26) receive instructions from the determining means (25) and adjust the brightness of panel elements (2) of the display panel, based on the determined brightness differences, in order to compensate brightness inhomogeneities among the panel elements (2). This can be done by regulating the brightness of elements within a backlight (28), or by directly controlling the transmissivity of the LCD elements via control bus (29). Likewise, incident light sensors (9) sensing luminance of ambient light and transmit the information/values to the luminance determining means (27) connected to the incident light sensors (9). This in turn also controls the compensating means (27). The two means (25) and (26) can also be combined, to take account of both values at once.

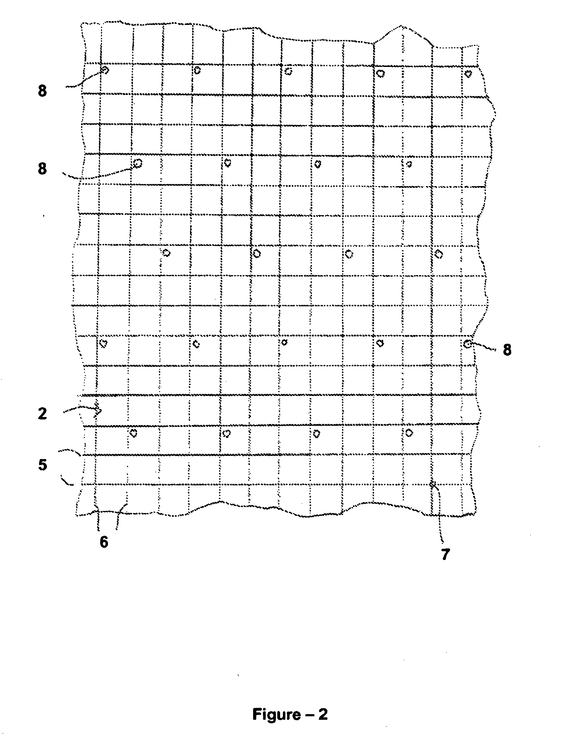

In Fig. 2, a first arrangement of the sensors according to the invention is shown. Sensors (8) are arranged in intervals along both dimensions of the display panel at a portion of each cell not covered by the transparent electrode (4). Only one kind of sensor is shown, i.e. the first subset of pixel brightness sensors are shown to be uniformly arranged in both dimensions of the panel.

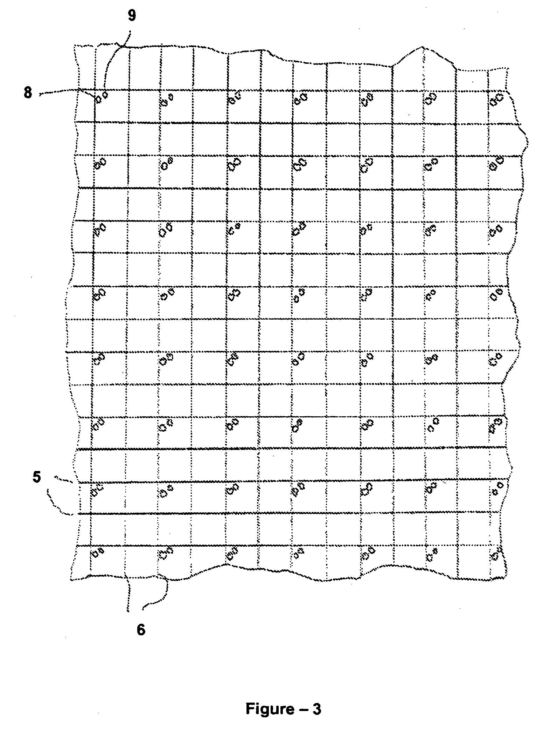

Fig. 3 shows another arrangement of sensors on a display panel (again exemplified by a TFT panel) according to a further embodiment of the invention, in which both pixel brightness sensors (8) and incident light sensors (9) are arranged at identical panel elements, in order to measure brightness and luminance of and upon the panel display.

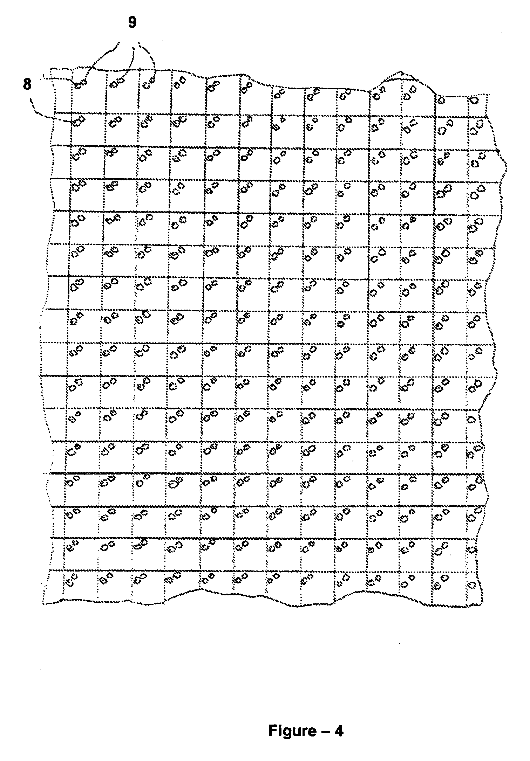

As a further exemplary embodiment of possible arrangements of the sensors on the panel display, a particularly preferred embodiment is shown in Fig. 4, in which both kinds of sensors (8), (9) are arranged at every panel element of a display panel. This arrangement allows for a very fine tunable measurement and adjusting of brightness and/or luminance differences. In all Figs. 2 to 4, no controlling devices for the sensors are shown, though the skilled persons were well aware of the fact that these must be provided.

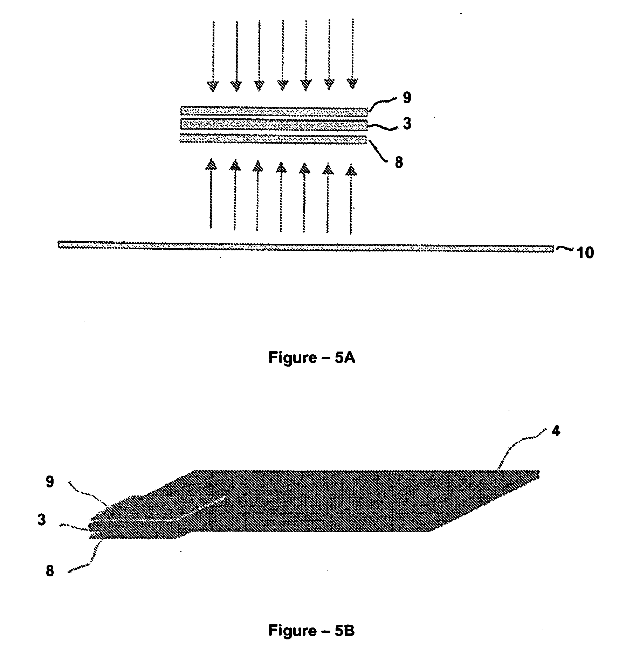

The description will now turn to particular arrangements of the sensors within a panel element. In Fig. 5A, a TFT (3) is shown sandwiched between two sensors (8) and (9), in which sensor (8) acts as a pixel brightness sensor sensing light (upward arrows) emitted from a backlight (10), while incident light sensor (9) senses incident light (downward arrows). By overlaying the sensors in a congruent fashion on the TFT (3), no additional space is consumed by these sensors. Fig. 5B shows in perspective view a possible arrangement of the two sensors (8) and (9) in relation to the transparent electrode (4). As can be seen, the sensors are arranged in a corner of the transparent electrode, in which also the TFT (3) is arranged.

Preferably, it is also possible to control the colors of pixels or sub-pixels by using this method. There are 3 sub-pixels (R, G, and B) for every pixel on display panel systems like cold cathode fluorescent lamp (CCFL) backlights, etc. Each sub-pixel is controlled by independent transistors. So, full color, contrast and brightness control can easily be established by controlling the brightness levels of each sub-pixel.

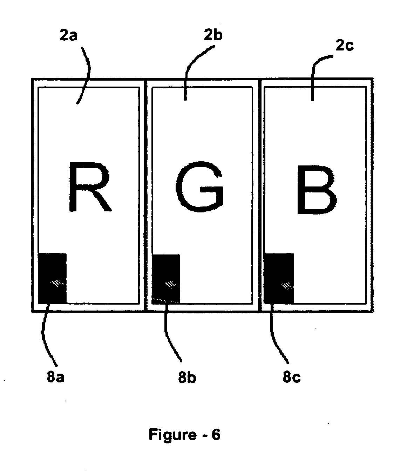

Fig. 6 shows such an embodiment in plane view. Each sub-pixel (2a, 2b and 2c) contains its own respective sensors (8 (or 9)a, 8b, and 8c). After having obtained color information with respect to particular panel elements, diverse processing may be performed in order to obtain desired results. For example, when providing the sub-pixels with luminance sensors below the filters used for generating the respective colors of the panel elements, it will be possible to sense color temperature of a light source the light of which is incident upon the panel display, and to compensate for color temperature of this external light, thereby optimizing the image generated by the display panel. This may be of considerable importance in the field of graphics processing or image manipulation, where precise color preview of an image before printing or publishing is required.

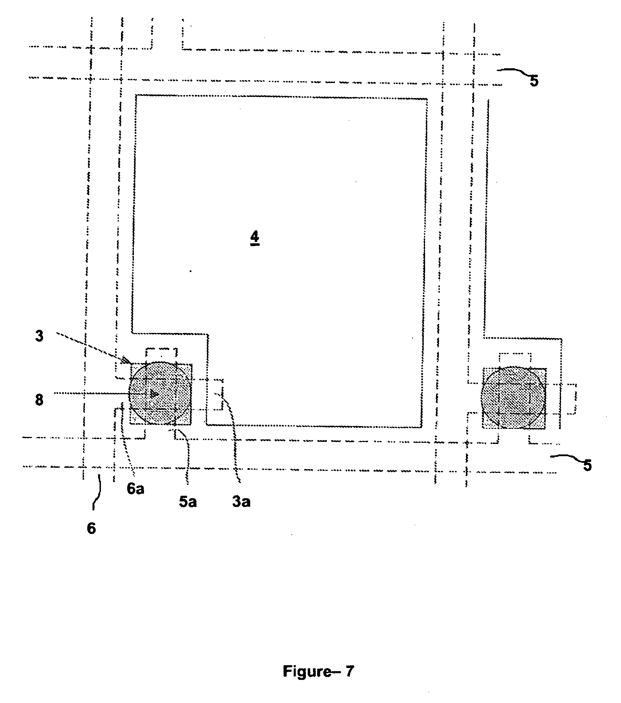

Fig. 7 shows an embodiment of the present invention with regard to a placement of the sensors on a TFT panel used in this embodiment. Here, a circular sensor (8 or 9) is positioned above or below a TFT (3) which is connected to column rows (6) and row lines (5), as explained with regard to Fig. 1. Also shown is a connecting element (3a) connecting the TFT (3) to the transparent electrode (4).

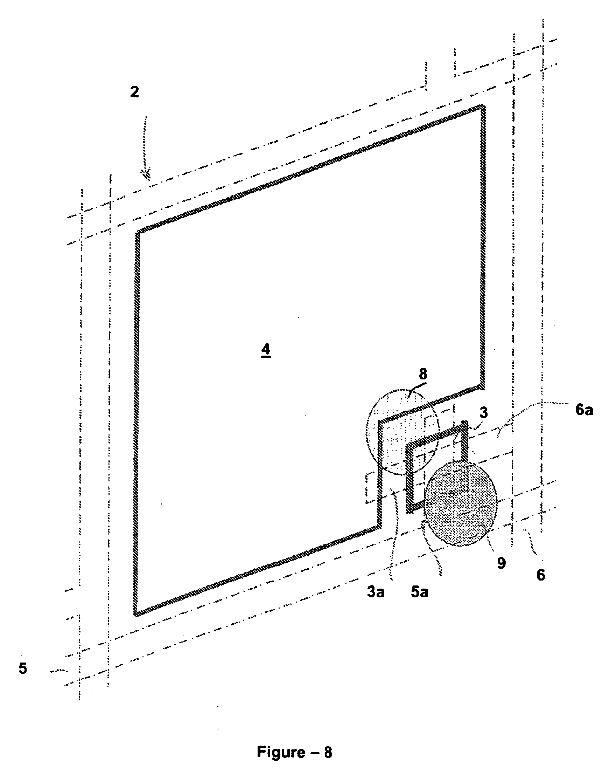

As shown in Fig. 8, sensors may be positioned on both faces of a TFT (3), i.e. above and below the TFT plane of the display panel. This arrangement allows for considerable space saving compared to locating the sensors at a different area of the panel element (2).

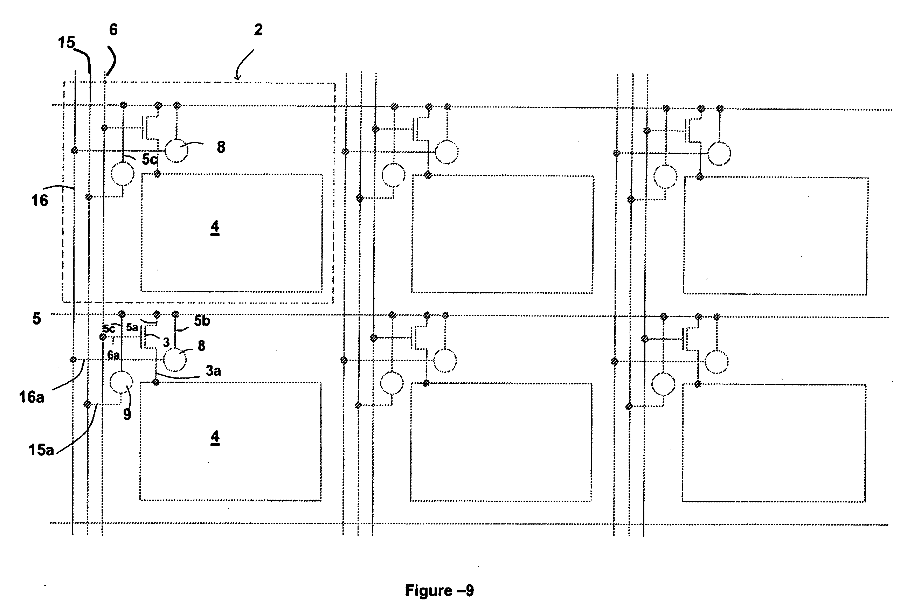

In the following, several electrical layouts showing embodiments of the present invention will be described, referring to Figs. 9 to 12.

In Fig. 9, a layout is shown in which extra wirings are provided for sensors (8, 9) in order to allow for a sensor read out independently of the control signals for the panel elements. Pixel brightness sensor (8) is for example on one lead thereof connected with the row connecting line (5) via sensor connecting line (5b), and with another lead connected to pixel brightness sensor line (16) via sensor connecting line (16a). Luminance sensor (9) is in turn connected to the row connecting line (5) via a sensor connecting line (5c) and to luminance sensor connecting line (15) via sensor connecting line (15a). As in previous embodiments, the TFT is connected to the row connecting line (5) via connecting line (5a), the column connecting lines (6) via connecting lines (6a) and transparent electrode (4) via connecting line (3a). It goes without saying that when using a different basic panel technology; the wiring may quite significantly differ from the wiring presented in Fig. 9, depending on the technological necessities of the used panel technology and on possibilities for providing the connecting lines.

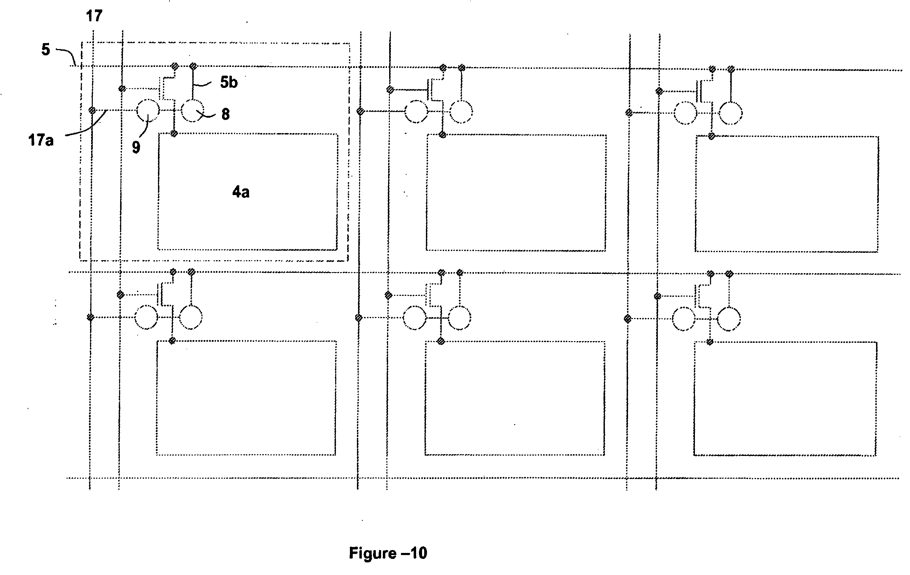

Fig. 10 shows a further embodiment of the invention with a somewhat simplified layout in comparison to Fig. 9. In this embodiment, the two sensors are connected in series and the panel element contains just one extra wiring per column for connecting both sensors. Accordingly, only one single sensor connecting line (5b) and a single combined sensor connecting line (17a) used to connect the sensors to the combined sensor connecting line (17) is required. While this approach simplifies the layout of connecting lines, additional measures may be required to allow for a timely controlled readout of the sensor information contained in the two sensors (8 and 9).

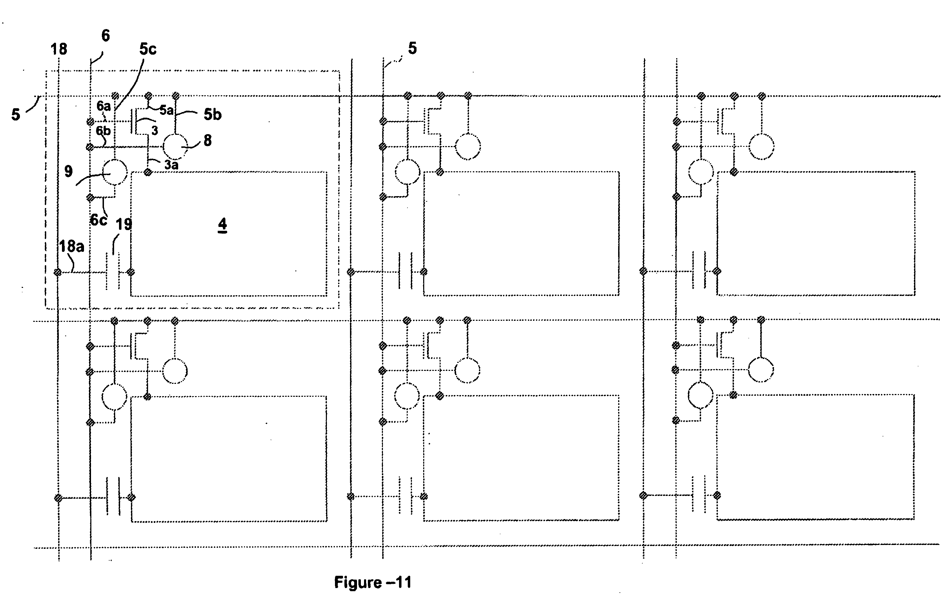

Another preferred embodiment of the present invention is shown in Fig. 11, in which no additional connection lines are required, and the row lines and column lines (5, 6) are concurrently used by the sensors, additionally to the TFTs. Accordingly, a sensor (8) is connected to row connecting line (5) via sensor connecting line (5b) and to column connecting line (6) via sensor connecting line (6b), while sensor (9) is connected to row connecting line (5) via sensor connecting line (5c) and to column connecting line (6) via sensor connecting line (6c). In Fig. 11, there is additionally shown a ground connecting line for the electrode (4), which is realized by a ground column connecting line (18), to which the electrode (4) is connected via connecting line (18a) and capacitance (19). Though it may be present in other embodiments, like those of Figs. 9 and 10, this ground connecting line has been omitted in the other figures.

Every sensor may be coupled to a charge storage device to store the luminance information. That charge storage device charges or discharges at a rate upon the resistivity or conductivity of the sensor. The charge on the charge storage device provides the luminance information of the effect of environmental light sources on the pixel or backlight luminance level, or both. This charge storage device is preferably employed when the approaches shown in Figs. 10 and 11 are used, since in these embodiments, a storage of the sensed information is required, due to the fact that this information can only be transmitted intermittently and concurrently with either the information of the respective other sensor (Fig. 10) or the controlling signals of the TFTs (Fig. 11).

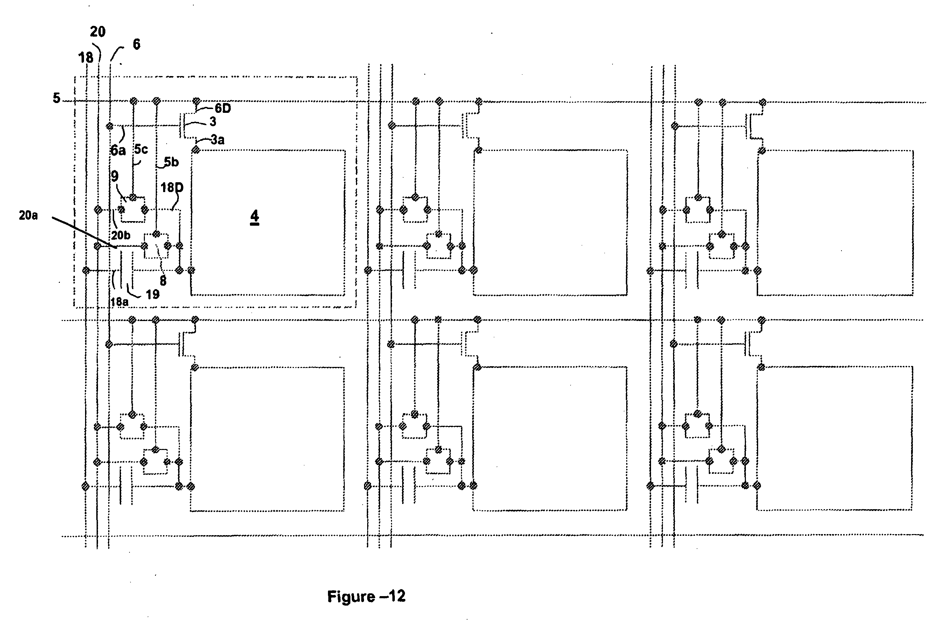

Fig. 12 shows a further preferred embodiment of the electric layout of the sensors arranged at a panel element (2) of a display panel. This embodiment has additional provisions for enabling and disabling the sensors. To this end, an enable column line (20) is additionally provided, to which the sensors (8, 9) are connected via enable connecting lines (20a, 20b) respectively. The sensors are additionally connected in parallel to ground connecting line (18) via connecting line (18b).

In a preferred embodiment, when the light emitting device is in an emitting state, the TFT uses the connections. When the light emitting device is in a non-emitting state, sensors use the connections in order.

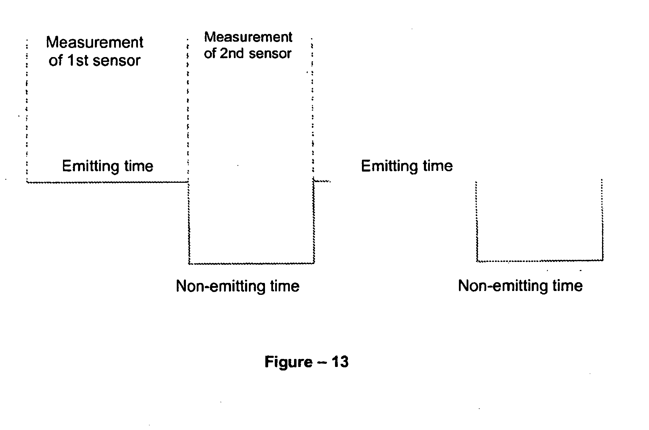

Exemplarily, and as shown in Fig. 13, the sensing may be done at different timings of the emitting panel elements. E.g., the measurement of a first sensor, for example the pixel brightness sensor (8), may be performed at an emitting time period of the panel element (2), while the measurement of the second sensor, for example the luminance sensor 9, may be performed at a non-emitting time period of the panel element (2).

According to such preferred embodiments, connections of the luminance sensors can be similar to TFT driving parts of the pixels / sub-pixels. They can also be connected in parallel / serial to TFT parts. By this way, there will be no need for additional connection lines for the sensors. In this preferred method of the invention, the same connections are used to drive TFT parts and luminance sensors.

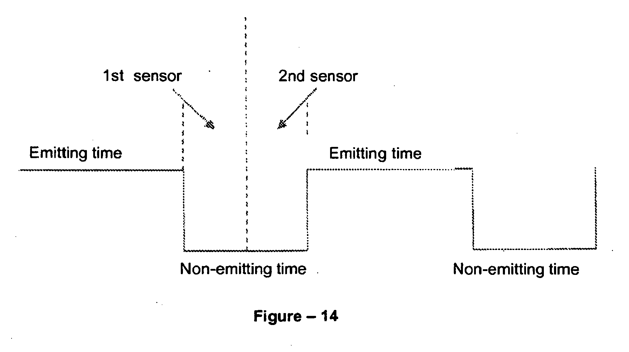

One way for implementing this approach of dual use of the connection lines is a time multiplexed approach, as shown in Fig. 14, in which, when the light emitting device is in an emitting state, the connections are used for controlling the panel element(s) connected therewith. When the light emitting device (2) is in a non-emitting state, the sensors (8, 9) use the connections for transmitting stored sensing information, e.g. the charge stored in a charge storage device described above. If two sensors are arranged at a panel element, both may be connected to the connection line und may use it sequentially. The situation shown in Fig. 14 corresponds to the measurements in Fig. 13, i.e. the first sensor, which is used first, must be read out first, while the second sensor can only be read out after its measurement has already started at the non-emitting time period.

Environmental light sources may have different effects on each pixel. Some panel elements may be perceived dark and some pixels may be perceived bright, because of environmental light sources shining on the respective panel elements. A self-driven pixel display device, as disclosed herein, is a solution to have a better perceived view on the display.

The inventive method is also applicable to adjusting only the environmental light effects. That means at least one luminance sensor (9) for each pixel / sub-pixel measures a luminance level environmental light source effects on the display panel and a pixel / sub-pixel adjustment is established by using the luminance level data.

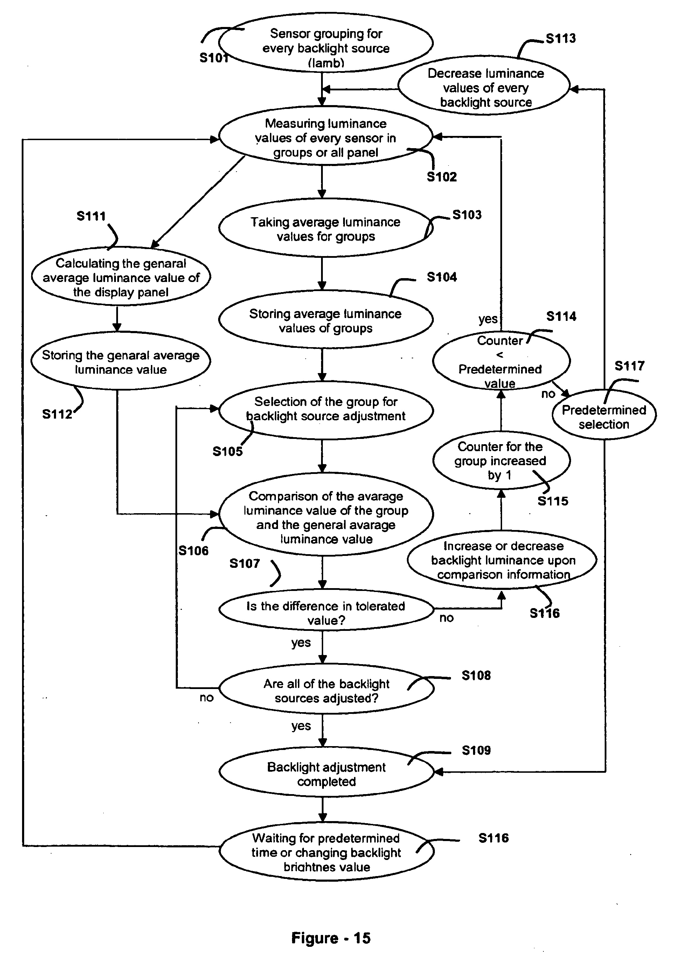

As comparative example, a backlight adjustment procedure is described and shown in Figure 15 below exemplarily for a backlight equipped TFT panel. It is to be understood that this procedure has to be adapted to different panel technologies and may be varied according to necessities of the layout, etc.

One or more sensors are grouped together to control individual backlight sources (lamps), since the display panel also comprises more than one light source for backlighting the panel elements (S101).

The luminance values of these grouped sensors are read and/or stored at the same time or sequentially, depending on the configuration of the connection lines and the controller(s) (S102).

For every individual sensor group, the average backlight luminance value is calculated (S103), stored (S104) and sequentially selected for comparison (S105).

The general average backlight luminance value for the backlight behind the display panel is also calculated (S111) by taking the average value of the average backlight luminance values of every sensor group or taking the average value of every pixel in groups during reading luminance information from sensors, and the calculated value is stored (S112).

The average backlight luminance values of the sensors groups are compared with the general average backlight luminance value (S106) selected in step (S105) to check if the average backlight luminance values are within a range of tolerated values of the general average backlight luminance value of the display panel (S107). This tolerated value range is set by the manufacturer or the user.

If all of the average backlight luminance values of the sensor groups are within a tolerated range (S107 = YES) for the values of the general average backlight luminance value of the display panel, the backlight adjustment is achieved (S108, S109) and there is no need to make a change to the luminance values of the backlight sources.

If the average backlight luminance value of a sensor group is not within the range of tolerated values (S107 = NO) for the general average backlight luminance value of the display panel, the luminance of the backlight source of that sensor group is increased or decreased based upon the difference between the average backlight luminance value of that sensor group (S116) and the general average backlight luminance value of the display panel.

The value of the increase or decrease in the luminance of the backlight source may be the difference between the average backlight luminance value of that sensor group and the general average backlight luminance value of the display panel, or as set by the manufacturer or the user.

The adjustment should be repeated and re-controlled after having made changes to the luminance values of the backlight sources. For controlling the repetition number of adjustments for a backlight source, there may be provided a counter for every backlight source or other group (S115). The counter related with a particular light source is incremented by one for every adjustment made on that backlight source. Adjustment of a backlight source can be stopped if the count of that backlight source reaches a predetermined value (S114 = NO). In this way, useless or ineffective adjustment of a possibly broken backlight source is avoided. Further, the adjustment procedure can be repeated after decreasing luminance values of every backlight source (S113) when the count of that backlight source reaches a predetermined value.

By applying this comparative method, backlight brightness uniformity can be established even if there are one or more possibly defunct backlight sources on the display panel.

The backlight luminance characteristic of the display panel changes with the brightness of the display panel. Also, the temperature of the backlight sources changes with the usage time. The luminance of a light source takes different values for different temperatures. So, backlight adjustment should be repeated for a predetermined time sequence or when the brightness is changed by the user. Hence, after the backlight adjustment has be completed (S109), the procedure waits for a predetermined time or upon changes to the backlight brightness value (S110), returns to step (S102).

After adjusting the backlight, all of the backlight luminance values of the sensors on the display panel should be sensed to find the minimum pixel backlight value (MPBV) for adjusting individual pixel brightness. Also, all of the backlight luminance values can be stored to have better performance at operations for pixel brightness adjustment.

The adjustment of individual pixel brightness is the procedure to calculate the effective pixel picture value (PPVeff). Pixel backlight luminance value (PBV) - which is measured by the sensors - of that pixel, the minimum pixel backlight value (MPBV) of the display panel and the pixel picture value (PPV) (the value of the pixel in a video frame) should be known to calculate the effective pixel picture value (PPVeff) for that pixel. PPVeff should be calculated for every pixel and for every frame. As every display panel has different characteristics, the adjustment formula may change upon the characteristics of display panels. The general formula for adjustment is shown below:

$$PPVeff = ( MPBV / PBV ) * PPV * constant$$

Instead of using stored PBV data, PBV can be measured by the related sensor during the pixel brightness adjustment.

The usage of PPVeff instead of PPV for the pixel is the individual pixel brightness adjustment.

The main purpose of reducing the effects of environmental light sources on the display panel is to increase visibility of the display panel for a user.

For reducing the effects of environmental light sources on the display panel, the pixel environmental luminance (PEL) value for every pixel / sub-pixel should be known. The luminance sensor on front of the TFT parts of the display panel is used to get the PEL value of the pixel / sub-pixel. These values can be measured during operation or can be stored for better performance while in operation.

Environmental light sources have different effects on different PPVs. In other words, the effect of an environmental light source on a pixel changes with the brightness, contrast and color values of that pixel.

Also, the effect of the environmental light on a pixel changes with the characteristic of the environmental light. That means; the effect of the environmental light on a pixel changes with its luminance and color.

The color of the environmental light can be determined as the sensors are behind the color filters of the pixels / sub-pixels. As they are also capable of determining the luminance of the environmental light, the characteristics of the environmental light can be analyzed and be used in adjustment.

Pixel environmental light (PEL) value of a pixel / sub-pixel is a coefficient for the operation of calculating new brightness, contrast and color values for that pixel / sub-pixel. These new values are used to calculate new pixel picture values for environmental light effects (PPVenv).

The adjustment for reducing the environmental light effects on the display panel is driving pixels / sub-pixels with their PPVenv.

The adjustment procedure is repeated for predetermined time sequences. This time sequence can be set by the manufacturer or the user.

The operations for calculating new brightness, contrast and color values for pixels / sub-pixels may change with the structure of the display panel. So, the calculation of new brightness, contrast and color values for reducing environmental light effects on the display panel should be defined by the manufacturer.

This method may be a part of the production of display panels. So, TV manufacturers do not need to make any changes on their cabinet molds or other mechanical design changes. Only some electronic modification is needed.

The principle of the inventive method is adjusting pixel / sub-pixel brightness and improving uniformity by using the environmental and luminance information that is determined from luminance sensors placed in every pixel / sub-pixel of the display panel. This method is also a solution for reducing effects of environmental light effects on display panels.

**Claims**

1. Display panel (1), comprisinga plurality of panel elements (2) arranged in a two dimensional array, wherein the panel elements (2) are light emitting devices, a first subset of pixel brightness sensors (8) uniformly arranged in both dimensions of the panel (1) at panel elements (2) of the panel (1), for sensing brightness of the light emitted from the panel elements (2) at which they are arranged; brightness determining means (25) connected to the pixel brightness sensors (8) for determining brightness differences of the panel elements (2) by comparing brightness levels sensed by different pixel brightness sensors (8) **characterized in that** it further comprises;

    - a second distinct subset of incident light sensors (9) uniformly arranged in both dimensions of the panel (1) at panel elements (2) of the panel (1), for sensing luminance of ambient light incident on the panel elements (2) at which they are arranged;
    - luminance determining means (27) connected to the incident light sensors (9) for determining luminance differences of the ambient light at the panels elements (2) by comparing luminance levels sensed by different incident light sensors (9) ; and
    - compensation means (26) for adjusting the brightness of panel elements (2) of the display panel (1), based on the determined brightness differences and determined luminance differences, in order to compensate brightness inhomogeneities among the panel elements (2).

2. Display panel (1) according to claim 1, **characterized in that** the compensation means (26) is configured to adjust the brightness to become uniform throughout the entire display panel (1).

3. Display panel (1) according to claim 1, **characterized in that** the compensation means (26) is configured for compensating differences in the luminance at different panel elements for the brightness to become uniform over the entire display panel (1).

4. Display panel (1) according to claim 1 or 3, **characterized in that** the sensors (8, 9) of both subsets of sensors are respectively arranged at identical panel elements (2), and form a set of sensor pairs.

5. Display panel (1) according to any of claims 1 to 4, **characterized in that** sensors (8, 9) are arranged at each panel element (2).

6. Display panel (1) according to any of claims 1 to 5, **characterized in that** the sensors (8, 9) are arranged on a surface of the panel elements (2).

7. Display panel (1) according to any of claims 1 to 6, **characterized in that** the incident light sensors (9) are arranged on a front surface of the panel elements (2) facing an observer and/or being exposed to ambient light, and/or the pixel brightness sensors (8) are arranged on a backside of the panel elements (2) opposite to the front surface.

8. Display panel (1) according to any of claims 1 to 7, **characterized in that** the pixel brightness sensor (8) and the incident light sensor (9) respectively located at each panel element (2) are substantially congruently arranged on said panel element (2).

9. Display panel (1) according to claim 1, **characterized in that** the compensation means (26) is configured for adjusting the power of the light emitting devices.

10. Display panel (1) according to any of claims 1 to 9 **characterized in that** the brightness determining means (25) comprises a plurality of brightness determining devices each connected with a group of adjacent sensors (8), for determining an average brightness of each said group of sensors (8), and **in that** the brightness determining means (25) is configured for determining brightness differences between these average brightness.

11. Display panel (1) according to any of claims 1 to 10 **characterized in that** the panel elements (2) are sub pixels (2a, 2b, 2c) for displaying one basic color of the color set of a pixel of the display panel (1).

**12.** Display panel (1) according to claim 11, **characterized in that** the sensors (8, 9) are arranged on one of the sub pixels (2a, 2b, 2c) of each pixel (2) of the display panel (1).

**13.** Display panel (1) according to any of claims 1 to 12, **characterized in that** the panel elements (2) are connected with a controller for controlling the panel elements via connecting lines (5, 6), and that the sensors (8, 9) are connected with the determining means (25, 27) and/or the compensation means (26) via the same connecting lines (5, 6).

**14.** Display panel (1) according to any of claims 1 to 13, **characterized in that** each sensor (8, 9) comprises a charge storage device for storing the brightness or luminance information sensed by said sensor.

**15.** Display panel (1) according to any of claims 1 to 14, **characterized in that** the panel elements (2) comprise color filters for determining a color of the light they emit, and **in that** the incident light sensors (9) are arranged at a position behind the color filters for sensing only incident light of the color for which the filters are transmissive.

**16.** Method for compensating inhomogeneities of the brightness of a display panel (1) comprising a plurality of panel elements (2) arranged in a two-dimensional array and being capable of emitting light, wherein the panel elements (2) are light emitting devices and the inhomogeneities of the brightness and/or of the perceived brightness are compensated by adjusting the power of the light emitting devices, comprising the steps:

- sensing brightness of the light emitted from the panel elements (2) by pixel brightness sensors (8) of a first subset of sensors arranged at panel elements (2) of the panel (1);
- determining brightness differences of the panel elements (2) by comparing brightness levels sensed by different pixel brightness sensors (8)

**characterized in that**, said method further comprises the steps of;

- sensing luminance of ambient light incident on the panel elements (2), by incident light sensors (9) of a second distinct subset arranged at panel elements (2) of the panel (1);
- determining luminance differences of the ambient light at the panels elements (2) by comparing luminance levels sensed by different incident light sensors (9); and
- adjusting the brightness of panel elements (2) of the display panel (1), based on the determined brightness differences and determined illuminance differences, in order to compensate brightness inhomogeneities among the panel elements (2).

**17.** Method according to claim 16, **characterized in that** the sensors (8, 9) of both subsets of sensors are respectively arranged at identical panel elements (2), and that both sensors (8, 9) of each panel element (2) at which said sensors (8, 9) are arranged are used for determining brightness of the panel element (2) and luminance of a light incident on the panel element (2).

**18.** Method according to claim 17, **characterized in that** the sensing of the luminance of ambient light is performed within a time period, at which the panel element (2) does not emit light.

**19.** Method according to any of claim 16 to 18, **characterized in that** the adjustment of the brightness of panel elements is based on both the brightness differences and the luminance differences.

**20.** Method according to any of claims 16 to 19, **characterized in that** an average brightness is determined for a group of adjacent sensors (8) and brightness differences are determined between these average brightness.

**21.** Method according to any of claims 16 to 20, **characterized in that** the panel elements 21. Method according to any of claims 16 to 20, **characterized in that** the panel elements (2) are sub pixels (2a, 2b, 2c) for displaying one basic color, respectively, of the color set of a pixel in the display panel (1), arranged in pixels in which every sub pixel (2a, 2b, 2c) emits a different basic color, and comprising the step:

adjusting the brightness of each sub pixel (2a, 2b, 2c) in a pixel in order to compensate for a specific determined color of the ambient light incident on said pixel.

**22.** Method according to any of claims 16 to 21, **characterized in that** each panel element (2) is connected with a controller for controlling the panel element (2) via at least one connecting line (5, 6), and that in the sensing step, a sensor (8, 9) arranged at the panel element is read out using the at least one connecting line (5, 6), to which the sensor is also connected.

23. Method according to claim 22, **characterized in that** the sensor (8, 9) is read out via the connecting line (5, 6) in a time period in which the panel element (2), which is connected with the same connecting line (5, 6), is not controlled.

24. Method for compensating color differences on a display panel (1) comprising a two dimensional array of panel elements (2), wherein the panel elements (2) are sub pixels (2a, 2b, 2c) for displaying one basic color of the color set of a pixel of the display panel (1), arranged in pixels in which every sub pixel (2a, 2b, 2c) emits a different basic color, wherein the sub pixels (2a, 2b, 2c) are light emitting devices and the inhomogeneities of the brightness and/or of the color are compensated by adjusting the ower of the light emitting devices, and comprising the steps:

- sensing, for each sub pixel (2a, 2b, 2c) of a pixel, a brightness of the light of the basic color emitted from the sub pixel (2a, 2b, 2c) by pixel brightness sensors (8) of a first subset of sensors arranged at each sub pixel (2a, 2b, 2c) of pixels;
- determining brightness differences of the sub pixels (2a, 2b, 2c) by comparing brightness levels sensed by different pixel brightness sensors (8)

**characterized in that**, said method further comprises the steps of;

- sensing luminance of ambient light incident on the sub pixels, by incident light sensors (9) of a second distinct subset arranged at sub pixels (2a, 2b, 2c) of pixels, wherein each sensor senses substantially light having a color corresponding to the color of the light emitted by the sub pixel (2a, 2b, 2c) at which the sensor (9) is arranged;
- determining luminance differences of the ambient light at the sub pixels (2a, 2b, 2c) of each pixel by comparing luminance levels sensed by different incident light sensors (9),
- determining a color of the ambient light incident on each pixel, based on the determined luminance differences; and
- adjusting the brightness of each sub pixel (2a, 2b, 2c) in a pixel in order to compensate for a specific determined color of the said pixel, based on the brightness differences and luminance differences determined for the sub pixels (2a, 2b, 2c) of the pixel.

25. Method according to claim 24, **characterized in that** the light incident on the sensors (9), is filtered by the same or a substantially identical filter as used for filtering the light of the sub pixels (2a, 2b, 2c) at which thesensors (9) are respectively arranged.

26. Method according to claim 24 or 25, **characterized in that** the sensors (8, 9) of both 26. Method according to claim 24 or 25, **characterized in that** the sensors (8, 9) of both subsets of sensors are respectively arranged at the sub pixels (2a, 2b, 2c) of identical pixels, and that both sensors of each sub pixel (2a, 2b, 2c) at which said sensors are arranged are used for determining brightness of the sub pixels (2a, 2b, 2c) and color of a light incident on the pixels.

27. Method according to any of in that pixel 27. Method according to any of claims 24 to 26, **characterized in that** each sub pixel (2a, 2b, 2c) is connected with a controller for controlling the sub pixel via at least one connecting line (5, 6), and that in the sensing step, a sensor (8, 9) arranged at the sub pixel (2a, 2b, 2c) is read out using the connecting line (5, 6), to which the sensor (8, 9) is also connected.

28. Method according to in that the (8, 9) 28. Method according to claim 27, **characterized in that** the sensor (8, 9) is read out via the connecting line (5, 6) in a time period in which the sub pixel (2a, 2b, 2c), which is connected with the same connecting line (5, 6), is not controlled.

**Patentansprüche**

1. Anzeigefeld (1), aufweisend eine Vielzahl an Feldelementen (2), angeordnet in einer zweidimensionalen Anordnung, wobei die Feldelemente (2) lichtemittierende Vorrichtungen sind; eine erste Untergruppe von Pixelhelligkeitssensoren (8), gleichmäßig angeordnet in beiden Dimensionen des Felds (1) an Feldelementen (2) des Felds (1), um die Helligkeit des von den Feldelementen (2) emittierten Lichts zu erfassen, an welchen diese angeordnet sind; Helligkeitsermittlungsmittel (25), verbunden mit den Pixelhelligkeitssensoren (8), um Helligkeitsunterschiede der Feldelemente (2) zu ermitteln durch Vergleich von Helligkeitsstufen, erfasst von verschiedenen Pixelhelligkeitssensoren (8), **gekennzeichnet dadurch, dass** es weiter aufweist;

- eine zweite Untergruppe von Einfallslichtsensoren (9), gleichmäßig angeordnet in beiden Dimensionen des Felds (1) an Feldelementen (2) des Felds (1), um die Leuchtdichte von Umgebungslichteinfall auf den Feldelementen (2), an welchen sie angeordnet sind, zu erfassen;
- Leuchtdichteermittlungsmittel (27) verbunden mit den Einfallslichtsensoren (9), um Leuchtdichteunterschiede des Umgebungslichts an den Feldelementen (2) zu bestimmen durch Vergleich von Leuchtdichtestufen, erfasst durch verschiedene Einfallslichtsensoren (9); und
- Ausgleichsmittel (26), um die Helligkeit der Feldelemente (2) des Anzeigefelds (1) anzupassen, basierend auf den festgestellten Helligkeitsunterschieden und festgestellten Leuchtdichteunterschieden, um Helligkeitsinhomogenitäten unter den Feldelementen (2) auszugleichen.

2. Anzeigefeld (1) gemäß Anspruch 1, **dadurch gekennzeichnet, dass** die Ausgleichsmittel (26) konfiguriert sind, um die Helligkeit anzupassen, so dass sie im gesamten Anzeigefeld (1) einheitlich wird.

3. Anzeigefeld (1) gemäß Anspruch 1, **dadurch gekennzeichnet, dass** die Ausgleichsmittel (26) konfiguriert sind, um Unterschiede in der Leuchtdichte verschiedener Feldelemente auszugleichen, so dass die Helligkeit im gesamten Anzeigefeld (1) einheitlich wird.

4. Anzeigefeld (1) gemäß Anspruch 1 oder 3, **dadurch gekennzeichnet, dass** die Sensoren (8, 9) beider Untergruppen jeweils an identischen Feldelementen (2) angeordnet sind, und einen Satz Sensorpaare bilden.

5. Anzeigefeld (1) gemäß einem der Ansprüche 1 bis 4, **dadurch gekennzeichnet, dass** Sensoren (8, 9) an jedem Feldelement (2) angeordnet sind.

6. Anzeigefeld (1) gemäß einem der Ansprüche 1 bis 5, **dadurch gekennzeichnet, dass** die Sensoren (8, 9) auf einer Oberfläche der Feldelemente (2) angeordnet sind.

7. Anzeigefeld (1) gemäß einem der Ansprüche 1 bis 6, **dadurch gekennzeichnet, dass** die Einfallslichtsensoren (9) an einer Frontoberfläche der Feldelemente (2) einem Beobachter zugewandt angeordnet sind und/oder Umgebungslicht ausgesetzt, und/oder die Pixelhelligkeitssensoren (8) an einer Rückseite der Feldelemente (2) auf der gegenüberliegenden Seite der Frontoberfläche angeordnet sind.

8. Anzeigefeld (1) gemäß einem der Ansprüche 1 bis 7, **dadurch gekennzeichnet, dass** der Pixelhelligkeitssensor (8) und der Einfallslichtsensor (9), entsprechend jeweils an jedem Feldelement (2) angeordnet, im Wesentlichen übereinstimmend an dem Feldelement (2) angeordnet sind.

9. Anzeigefeld (1) gemäß Anspruch 1, **dadurch gekennzeichnet, dass** die Ausgleichsmittel (26) konfiguriert sind, um die Stärke der lichtemittierenden Vorrichtungen anzupassen.

10. Anzeigefeld (1) gemäß einem der Ansprüche 1 bis 9, **dadurch gekennzeichnet, dass** die Helligkeitsermittlungsmittel (25) eine Vielzahl von Helligkeitsermittlungsvorrichtungen aufweisen, von denen jede mit einer Gruppe von angrenzenden Sensoren (8) verbunden ist, um eine mittlere Helligkeit von jeder Gruppe von Sensoren (8) zu bestimmen, und dadurch, dass die Helligkeitsermittlungsmittel (25) konfiguriert sind, um Helligkeitsunterschiede zwischen diesen mittleren Helligkeiten zu bestimmen.

11. Anzeigefeld (1) gemäß einem der Ansprüche 1 bis 10, **dadurch gekennzeichnet, dass** die Feldelemente (2) Unterpixel (2a, 2b, 2c) sind, um eine Grundfarbe des Farbsatzes eines Pixels des Anzeigefelds (1) anzuzeigen.

12. Anzeigefeld (1) gemäß einem der Ansprüche 1 bis 11, **dadurch gekennzeichnet, dass** die Sensoren (8, 9) auf einem der Unterpixel (2a, 2b, 2c) eines jeden Pixels (2) des Anzeigefelds (1) angeordnet sind.

13. Anzeigefeld (1) gemäß einem der Ansprüche 1 bis 12, **dadurch gekennzeichnet, dass** die Feldelemente (2) mit einer Steuerung verbunden sind, um die Feldelemente über Verbindungslinien (5, 6) zu steuern und dass die Sensoren (8, 9) mit den Ermittlungsmitteln (25, 27) und/oder den Ausgleichsmitteln (26) verbunden sind über die selben Verbindungslinien (5, 6).

14. Anzeigefeld (1) gemäß einem der Ansprüche 1 bis 13, **dadurch gekennzeichnet, dass** jeder Sensor (8, 9) eine Ladungsspeichervorrichtung aufweist, um die Helligkeits-oder Leuchtdichteeinformation, erfasst durch den Sensor, zu speichern.

15. Anzeigefeld (1) gemäß einem der Ansprüche 1 bis 14, **dadurch gekennzeichnet, dass** die Feldelemente (2) Farbfilter aufweisen, um eine Farbe des Lichts, das sie emittieren, zu bestimmen, und dadurch, dass die Einfallslichtsensoren (9) in einer Position hinter den Farbfiltern angeordnet sind, um nur einfallendes Licht der Farbe zu erfassen, für die die Filter durchlässig sind.

16. Verfahren zum Ausgleichen von Inhomogenitäten in der Helligkeit eines Anzeigefelds (1), welches eine Vielzahl von Feldelementen (2), angeordnet in einer zweidimensionalen Anordnung, aufweist, und fähig ist, Licht zu emittieren, wobei die Feldelemente (2) lichtemittierende Vorrichtungen sind und die Inhomogenitäten der Helligkeit und/ oder der wahrgenommenen Helligkeit ausgeglichen werden durch Anpassen der Leistung der lichtemittierenden Einheiten, aufweisend die Schritte:

- Erfassen der Helligkeit des Lichts, emittiert von den Feldelementen (2), durch Pixelhelligkeitssensoren (8) einer ersten Untergruppe von Sensoren, angeordnet an den Feldelementen (2) des Anzeigefelds (1);
- Feststellen von Helligkeitsunterschieden der Feldelemente (2) durch Vergleich von Helligkeitsstufen, erfasst von verschiedenen Pixelhelligkeitssensoren (8),

**dadurch gekennzeichnet, dass** das Verfahren weiter die Schritte aufweist:

- Erfassen der Leuchtdichte von Umgebungslichteinfall auf den Feldelementen (2) durch Einfallslichtsensoren (9) einer zweiten unterschiedlichen Untergruppe, angeordnet an Feldelementen (2) des Anzeigefelds (1);
- Feststellen von Leuchtdichteunterschieden des Umgebungslichts an den Feldelementen (2) durch Vergleich von Leuchtdichtestufen, erfasst von verschiedenen Einfallslichtsensoren (9); und
- Anpassen der Helligkeit der Feldelemente (2) des Anzeigefelds (1), basierend auf den festgestellten Helligkeitsunterschieden und festgestellten Leuchtdichteunterschieden, um Helligkeitsinhomogenitäten zwischen den Feldelementen (2) auszugleichen.

17. Verfahren gemäß Anspruch 16, **dadurch gekennzeichnet, dass** die Sensoren (8, 9) beider Sensoren-Untergruppen jeweils an identischen Feldelementen (2) angeordnet sind, und dass beide Sensoren (8, 9) jedes Feldelements (2), an welchem die Sensoren (8, 9) angeordnet sind, genutzt werden, um die Helligkeit des Feldelements (2) und die Leuchtdichte von einfallendem Licht auf dem Feldelement (2) festzustellen.

18. Verfahren gemäß Anspruch 17, **dadurch gekennzeichnet, dass** das Erfassen der Leuchtdichte des Umgebungslichts in einem Zeitraum durchgeführt wird, in welchem das Feldelement (2) kein Licht emittiert.

19. Verfahren gemäß einem der Ansprüche 16 bis 18, **dadurch gekennzeichnet, dass** die Anpassung der Helligkeit der Feldelemente auf sowohl den Helligkeitsunterschieden als auch den Leuchtdichteunterschieden basiert.

20. Verfahren gemäß einem der Ansprüche 16 bis 19, **dadurch gekennzeichnet, dass** eine mittlere Helligkeit bestimmt wird für eine Gruppe angrenzender Sensoren (8) und Helligkeitsunterschiede festgestellt werden zwischen diesen mittleren Helligkeiten.

21. Verfahren gemäß einem der Ansprüche 16 bis 20, **dadurch gekennzeichnet, dass** die Feldelemente (2) Unterpixel (2a, 2b, 2c) sind, um jeweils eine Grundfarbe des Farbsatzes eines Pixels im Anzeigefeld (1) anzuzeigen, angeordnet in Pixeln, in welchen jedes Unterpixel (2a, 2b, 2c) eine unterschiedliche Grundfarbe emittiert, und aufweisend den Schritt:

Anpassen der Helligkeit jedes Unterpixels (2a, 2b, 2c) in einem Pixel, um eine bestimmte festgelegte Farbe des einfallenden Umgebungslichts auf besagtem Pixel auszugleichen.

22. Verfahren gemäß einem der Ansprüche 16 bis 21, **dadurch gekennzeichnet, dass** jedes Feldelement (2) mit einer Steuerung verbunden ist, um das Feldelement (2) über mindestens eine Verbindungslinie (5, 6) zu steuern und dass im erfassenden Schritt ein Sensor (8, 9), angeordnet am Feldelement, unter Einsatz mindestens einer Verbindungslinie (5, 6) ausgelesen wird, zu welcher der Sensor ebenfalls verbunden ist.

23. Verfahren gemäß Anspruch 22, **dadurch gekennzeichnet, dass** der Sensor (8, 9) über die Verbindungslinie (5, 6) ausgelesen wird in einem Zeitraum, in welchem das Feldelement (2), welches mit derselben Verbindungslinie (5, 6) verbunden ist, nicht angesteuert wird.

24. Verfahren zum Ausgleichen von Farbunterschieden an einem Anzeigefeld (1), aufweisend eine zweidimensionale Anordnung von Feldelementen (2), wobei die Feldelemente (2) Unterpixel (2a, 2b, 2c) sind, um eine Grundfarbe des Farbsatzes eines Pixels des Anzeigefelds (1) anzuzeigen, angeordnet in Pixeln, in welchen jedes Unterpixel (2a, 2b, 2c) eine unterschiedliche Grundfarbe emittiert, wobei die Unterpixel (2a, 2b, 2c) lichtemittierende Vorrichtungen sind und die Inhomogenitäten der Helligkeit und/oder der Farbe ausgeglichen werden durch Anpassen der Leistung der lichtemittierenden Vorrichtungen, und aufweisend die Schritte:

- Erfassen, für jedes Unterpixel (2a, 2b, 2c) eines Pixels, einer Helligkeit des vom Unterpixels (2a, 2b, 2c) emittierten Lichts der Grundfarbe durch Pixelhelligkeitssensoren (8) einer ersten Untergruppe von Sensoren, angeordnet an jedem Unterpixel (2a, 2b, 2c) der Pixel;
- Feststellen von Helligkeitsunterschieden der Unterpixel (2a, 2b, 2c) durch Vergleich von Helligkeitsstufen, erfasst von verschiedenen Pixelhelligkeitssensoren (8),

dadurch gekennzeichnet, dass das Verfahren weiter die Schritte aufweist:

- Erfassen der Leuchtdichte des einfallenden Umgebungslichts auf den Unterpixeln durch Einfallslichtsensoren (9) einer zweiten unterschiedlichen Untergruppe, angeordnet an den Unterpixeln (2a, 2b, 2c) der Pixel, wobei jeder Sensor im Wesentlichen Licht ermittelt, das eine Farbe hat entsprechend der Farbe des Lichts, welches das Unterpixel (2a, 2b, 2c), an welchem der Sensor (9) angeordnet ist, emittiert;
- Feststellen der Leuchtdichteunterschiede des Umgebungslichts an den Unterpixeln (2a, 2b, 2c) eines jeden Pixels durch Vergleich von Leuchtdichtestufen, erfasst von verschiedenen Einfallslichtsensoren (9),
- Feststelllen einer Farbe des einfallenden Umgebungslicht auf jedem Pixel, basierend auf den festgelegten Leuchtdichteunterschieden; und
- Anpassen der Helligkeit jedes Unterpixels (2a, 2b, 2c) in einem Pixels, um eine bestimmte festgelegte Farbe auf besagtem Pixel auszugleichen, basierend auf den für die Unterpixel (2a, 2b, 2c) des Pixels festgestellten Helligkeitsunterschieden und Leuchtdichteunterschieden.

25. Verfahren gemäß Anspruch 24, dadurch gekennzeichnet, dass der Lichteinfall auf den Sensoren (9) gefiltert wird durch den gleichen oder einen im Wesentlichen identischen Filter, wie für das Filtern des Lichts der Unterpixel (2a, 2b, 2c) genutzt wird, an welchen die Sensoren (9) jeweils angeordnet sind.

26. Verfahren gemäß Anspruch 24 oder 25, dadurch gekennzeichnet, dass die Sensoren (8, 9) beider Untergruppen von Sensoren jeweils an den Unterpixeln (2a, 2b, 2c) identischer Pixel angeordnet sind, und dass beide Sensoren jedes Unterpixels (2a, 2b, 2c), an welchem besagte Sensoren angeordnet sind, genutzt werden, um Helligkeit der Unterpixel (2a, 2b, 2c) und Farbe des Lichteinfalls auf den Pixeln festzustellen.

27. Verfahren gemäß einem der Ansprüche 24 bis 26, dadurch gekennzeichnet, dass jedes Unterpixel (2a, 2b, 2c) mit einer Steuerung verbunden ist, um das Unterpixel (2a, 2b, 2c) durch mindestens eine Verbindungslinie (5, 6) zu steuern, und dass im erfassenden Schritt ein Sensor (8, 9), angeordnet am Unterpixel (2a, 2b, 2c), ausgelesen wird unter Nutzung der Verbindungslinie (5, 6), zu welcher der Sensor (8, 9) ebenfalls verbunden ist.

28. Verfahren gemäß Anspruch 27, dadurch gekennzeichnet, dass der Sensor (8, 9) ausgelesen wird über die Verbindungslinie (5, 6) in einem Zeitraum, in welchem das Unterpixel (2a, 2b, 2c), welches mit derselben Verbindungslinie (5, 6) verbunden ist, nicht angesteuert wird.

**Revendications**

1. Panneau d'affichage (1), comprenant une pluralité d'éléments de panneau (2) agencés dans un réseau bidimensionnel, dans lequel les éléments de panneau (2) sont des dispositifs électroluminescents, un premier sous-ensemble de capteurs de luminosité de pixel (8) agencés uniformément dans les deux dimensions du panneau (1) à des éléments de panneau (2) du panneau (1), pour détecter une luminosité de la lumière émise des éléments de panneau (2) auxquels ils sont agencés ; un moyen de détermination de luminosité (25) relié aux capteurs de luminosité de pixel (8) pour déterminer des différences de luminosité des éléments de panneau (2) en comparant des niveaux de luminosité détectés par différents capteurs de luminosité de pixel (8), **caractérisé en ce qu'**il comprend en outre :

- un deuxième sous-ensemble distinct de capteurs de lumière incidente (9) agencés uniformément dans les deux dimensions du panneau (1) à des éléments de panneau (2) du panneau (1), pour détecter une luminance de la lumière ambiante incidente sur les éléments de panneau (2) auxquels ils sont agencés ;
- un moyen de détermination de luminance (27) relié aux capteurs de lumière incidente (9) pour déterminer des différences de luminance de la lumière ambiante aux éléments de panneau (2) en comparant des niveaux de luminance détectés par différents capteurs de lumière incidente (9) ; et
- un moyen de compensation (26) pour régler la luminosité des éléments de panneau (2) du panneau d'affichage (1), sur la base des différences de luminosité déterminées et des différences de luminance déterminées, afin de compenser des hétérogénéités de luminosité parmi les éléments de panneau (2).

2.  Panneau d'affichage (1) selon la revendication 1, **caractérisé en ce que** le moyen de compensation (26) est configuré pour régler la luminosité pour qu'elle devienne uniforme sur tout le panneau d'affichage (1).

3.  Panneau d'affichage (1) selon la revendication 1, **caractérisé en ce que** le moyen de compensation (26) est configuré pour compenser des différences de la luminance à différents éléments de panneau pour que la luminosité devienne uniforme surtout le panneau d'affichage (1).

4.  Panneau d'affichage (1) selon la revendication 1 ou 3, **caractérisé en ce que** les capteurs (8, 9) des deux sous-ensembles de capteurs sont respectivement agencés à des éléments de panneau (2) identiques, et forment un ensemble de paires de capteurs

5.  Panneau d'affichage (1) selon l'une quelconque des revendications 1 à 4, **caractérisé en ce que** les capteurs (8, 9) sont agencés à chaque élément de panneau (2).

6.  Panneau d'affichage (1) selon l'une quelconque des revendications 1 à 5, **caractérisé en ce que** les capteurs (8, 9) sont agencés sur une surface des éléments de panneau (2).

7.  Panneau d'affichage (1) selon l'une quelconque des revendications 1 à 6, **caractérisé en ce que** les capteurs de lumière incidente (9) sont agencés sur une surface avant des éléments de panneau (2) faisant face à un observateur et/ou étant exposée à une lumière ambiante, et/ou les capteurs de luminosité de pixel (8) sont agencés sur un côté arrière des éléments de panneau (2) opposé à la surface avant.

8.  Panneau d'affichage (1) selon l'une quelconque des revendications 1 à 7, **caractérisé en ce que** le capteur de luminosité de pixel (8) et le capteur de lumière incidente (9) respectivement situés à chaque élément de panneau (2) sont agencés de manière sensiblement congruente sur ledit élément de panneau (2).

9.  Panneau d'affichage (1) selon la revendication 1, **caractérisé en ce que** le moyen de compensation (26) est configuré pour régler la puissance des dispositifs électroluminescents.

10. Panneau d'affichage (1) selon l'une quelconque des revendications 1 à 9, **caractérisé en ce que** le moyen de détermination de luminosité (25) comprend une pluralité de dispositifs de détermination de luminosité étant chacun reliés à un groupe de capteurs adjacents (8), pour déterminer une luminosité moyenne de chacun dudit groupe de capteurs (8), et **en ce que** le moyen de détermination de luminosité (25) est configuré pour déterminer des différences de luminosité entre ces luminosités moyennes.

11. Panneau d'affichage (1) selon l'une quelconque des revendications 1 à 10, **caractérisé en ce que** les éléments de panneau (2) sont des sous-pixels (2a, 2b, 2c) pour afficher une couleur de base de l'ensemble de couleurs d'un pixel du panneau d'affichage (1).

12. Panneau d'affichage (1) selon la revendication 11, **caractérisé en ce que** les capteurs (8, 9) sont agencés sur l'un des sous-pixels (2a, 2b, 2c) de chaque pixel (2) du panneau d'affichage (1).

13. Panneau d'affichage (1) selon l'une quelconque des revendications 1 à 12, **caractérisé en ce que** les éléments de panneau (2) sont reliés à un organe de commande pour commander les éléments de panneau par l'intermédiaire de lignes de liaison (5, 6), et **en ce que** les connecteurs (8, 9) sont reliés au moyen de détermination (25, 27) et/ou au moyen de compensation (26) par l'intermédiaire des mêmes lignes de liaison (5, 6).

14. Panneau d'affichage (1) selon l'une quelconque des revendications 1 à 13, **caractérisé en ce que** chaque capteur (8, 9) comprend un dispositif de stockage de charge pour stocker les informations de luminosité ou de luminance détectées par ledit capteur.

15. Panneau d'affichage (1) selon l'une quelconque des revendications 1 à 14, **caractérisé en ce que** les éléments de panneau (2) comprennent des filtres de couleur pour déterminer une couleur de la lumière qu'ils émettent, et **en ce que** les capteurs de lumière incidente (9) sont agencés à une position derrière les filtres de couleur pour détecter uniquement la lumière incidente de la couleur pour laquelle les filtres sont transmissifs.

16. Procédé de compensation d'hétérogénéités de la luminosité d'un panneau d'affichage (1), comprenant une pluralité d'éléments de panneau (2) agencés dans un réseau bidimensionnel et capables d'émettre de la lumière, dans lequel les éléments de panneau (2) sont des dispositifs électroluminescents et les hétérogénéités de la luminosité et/ou de la luminosité perçue sont compensées en réglant la puissance des dispositifs électroluminescents, comprenant les étapes de :

   - la détection d'une luminosité de la lumière émise des éléments de panneau (2) par des capteurs de luminosité de pixel (6) d'un premier sous-ensemble de capteurs agencés à des éléments de panneau (2) du panneau (1) ;
   - la détermination de différences de luminosité des éléments de panneau (2) en comparant des niveaux de luminosité détectés par différents capteurs de luminosité de pixel (8),

   **caractérisé en ce que** ledit procédé comprend en outre les étapes de :

   - la détection d'une luminance de la lumière ambiante incidente sur les éléments de panneau (2), par des capteurs de lumière incidente (9) d'un deuxième sous-ensemble distinct agencé à des éléments de panneau (2) du panneau (1) ;
   - la détermination de différences de luminance de la lumière ambiante aux éléments de panneau (2) en comparant des niveaux de luminance détectés par différents capteurs de lumière incidente (9) ; et
   - le réglage de la luminosité des éléments de panneau (2) du panneau d'affichage (1), sur la base des différences de luminosité déterminées et des différences de luminance déterminées, afin de compenser des hétérogénéités de luminosité parmi les éléments de panneau (2).

17. Procédé selon la revendication 16, **caractérisé en ce que** les capteurs (8, 9) des deux sous-ensembles de capteurs sont respectivement agencés à des éléments de panneau (2) identiques, et **en ce que** les deux capteurs (8, 9) de chaque élément de panneau (2) auquel lesdits capteurs (8, 9) sont agencés sont utilisés pour déterminer une luminosité de l'élément de panneau (2) et une luminance d'une lumière incidente sur l'élément de panneaux (2).

18. Procédé selon la revendication 17, **caractérisé en ce que** la détection de la luminance de la lumière ambiante est effectuée au cours d'une période de temps pendant laquelle l'élément de panneau (2) n'émet pas de lumière.

19. Procédé selon l'une quelconque des revendications 16 à 18, **caractérisé en ce que** le réglage de la luminosité des éléments de panneau est basé sur les différences de luminosité et les différences de luminance.

20. Procédé selon l'une quelconque des revendications 16 à 19, **caractérisé en ce qu'**une luminosité moyenne est déterminée pour un groupe de capteurs adjacents (8) et des différences de luminosité sont déterminées entre ces luminosités moyennes.

21. Procédé selon l'une quelconque des revendications 16 à 20, **caractérisé en ce que** les éléments de panneau (2) sont des sous-pixels (2a, 2b, 2c) pour afficher respectivement une couleur de base de l'ensemble de couleurs d'un pixel dans le panneau d'affichage (1), agencés en pixels dans lesquels chaque sous-pixel (2a, 2b, 2c) émet une couleur de base différente, et comprenant l'étape de :

   le réglage de la luminosité de chaque sous-pixel (2a, 2b, 2c) dans un pixel afin de compenser une couleur déterminée spécifique de la lumière ambiante incidente sur ledit pixel.

22. Procédé selon l'une quelconque des revendications 16 à 21, **caractérisé en ce que** chaque élément de panneau (2) est relié à un organe de commande pour commander l'élément de panneau (2) par l'intermédiaire d'au moins une ligne de liaison (5, 6), et **en ce que**, à l'étape de détection, un capteur (8, 9) agencé à l'élément de panneau est lu en utilisant l'au moins une ligne de liaison (5, 6), à laquelle le capteur est également relié.

**23.** Procédé selon la revendication 22, **caractérisé en ce que** le capteur (8, 9) est lu par l'intermédiaire de la ligne de liaison (5, 6) au cours d'une période de temps pendant laquelle l'élément de panneau (2), qui est relié à la même ligne de liaison (5, 6), n'est pas commandé.

**24.** Procédé de compensation de différences de couleur sur un panneau d'affichage (1) comprenant un réseau bidimensionnel d'éléments de panneau (2), dans lequel les éléments de panneau (2) sont des sous-pixels (2a, 2b, 2c) pour afficher une couleur de base de l'ensemble de couleurs d'un pixel du panneau d'affichage (1), agencés en pixels dans lesquels chaque sous-pixel (2a, 2b, 2c) émet une couleur de base différente, dans lequel les sous-pixels (2a, 2b, 2c) sont des dispositifs électroluminescents et les hétérogénéités de la luminosité et/ou de la couleur sont compensées en réglant la puissance des dispositifs électroluminescents, et comprenant les étapes de :

- la détection, pour chaque sous-pixel (2a, 2b, 2c) d'un pixel, d'une luminosité de la lumière de la couleur de base émise du sous-pixel (2a, 2b, 2c) par des capteurs de luminosité de pixel (8) d'un premier sous-ensemble de capteurs agencés à des sous-pixels (2a, 2b, 2c) de pixels ;
- la détermination de différences de luminosité des sous-pixels (2a, 2b, 2c) en comparant des niveaux de luminosité détectés par différents capteurs de luminosité de pixel (8),

**caractérisé en ce que** ledit procédé comprend en outre les étapes de :

- la détection d'une luminance de la lumière ambiante incidente sur les sous-pixels, par des capteurs de lumière incidente (9) d'un deuxième sous-ensemble distinct agencé à des sous-pixels (2a, 2b, 2c) de pixels, dans lequel chaque capteur détecte sensiblement une lumière ayant une couleur correspondant à la couleur de la lumière émise par le sous-pixel (2a, 2b, 2c) auquel le capteur (9) est agencé ;
- la détermination de différences de luminance de la lumière ambiante aux sous-pixels (2a, 2b, 2c) de chaque pixel en comparant des niveaux de luminance détectés par différents capteurs de lumière incidente (9) :
- la détermination d'une couleur de la lumière ambiante incidente sur chaque pixel sur la base des différences de luminance déterminées ; et
- le réglage de la luminosité de chaque sous-pixel (2a, 2b, 2c) dans un pixel afin de compenser une couleur déterminée spécifique dudit pixel, sur la base des différences de luminosité et des différences de luminance déterminées pour les sous-pixels (2a, 2b, 2c) du pixel.

**25.** Procédé selon la revendication 24, **caractérisé en ce que** la lumière incidente sur les capteurs (9) est filtrée par un filtre identique ou sensiblement identique à celui utilisé pour filtrer la lumière des sous-pixels (2a, 2b, 2c) auxquels les capteurs (9) sont respectivement agencés.

**26.** Procédé selon la revendication 24 ou 25, **caractérisé en ce que** les capteurs (8, 9) des deux sous-ensembles de capteurs sont respectivement agencés aux sous-pixels (2a, 2b, 2c) de pixels identiques, et **en ce que** les deux capteurs de chaque sous-pixel (2a, 2b, 2c) auquel lesdits capteurs sont agencés sont utilisés pour déterminer une luminosité des sous-pixels (2a, 2b, 2c) et une couleur d'une lumière incidente sur les pixels.

**27.** Procédé selon l'une quelconque des revendications 24 à 26, **caractérisé en ce que** chaque sous-pixel (2a, 2b, 2c) est relié à un organe de commande pour commander le sous-pixel par l'intermédiaire d'au moins une ligne de liaison (5, 6), et **en ce que**, à l'étape de détection, un capteur (8, 9) agencé au sous-pixel (2a, 2b, 2c) est lu en utilisant la ligne de liaison (5, 6), à laquelle le capteur (8, 9) est également relié.

**28.** Procédé selon la revendication 27, **caractérisé en ce que** le capteur (8, 9) est lu par l'intermédiaire de la ligne de liaison (5, 6) au cours d'une période de temps pendant laquelle le sous-pixel (2a, 2b, 2c), qui est relié à la même ligne de liaison (5, 6), n'est pas commandé.

Figure – 1

**Figure – 2**

**Figure – 3**

Figure – 4

Figure – 5A

Figure – 5B

Figure - 6

**Figure– 7**

**Figure – 8**

Figure –9

Figure –10

Figure –11

EP 2 028 640 B1

Figure –12

Figure – 13

1st sensor                    2nd sensor

Emitting time                              Emitting time

Non-emitting time              Non-emitting time

**Figure – 14**

**Figure - 15**

**Figure - 16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1335430 A1

- US 20070115228 A1